# EUROPEAN PATENT APPLICATION

(11) **EP 2 154 438 A1**
(43) Date of publication of application: **17.02.2010**
(21) Application number: 08764808.5
(22) Date of filing: 28.05.2008
(51) Int. Cl.: F24F 11/02, G06F 11/00

(54) **AIR CONDITIONER, INDOOR APPARATUS AND OUTDOOR APPARATUS**

(30) Priority: 08.06.2007 JP 2007153238
(71) Applicant: Sharp Kabushiki Kaisha, Osaka-shi, Osaka 545-8522 (JP)
(72) Inventor: The designation of the inventor has not yet been filed
(74) Representative: Treeby, Philip David William
(86) International application number: PCT/JP2008/059792
(87) International publication number: WO 2008/152913

(57) **Abstract**

Each of indoor units and outdoor unit includes a flash microcomputer having a first rewritable storage area for storing its own control program together with respective revision number information, and a second rewritable storage area for storing control programs for the at least one of the other indoor units and outdoor unit than itself together with revision number information. In response to a predetermined operation, the flash microcomputer acquires revision number information stored in the at least one of the other indoor units and outdoor unit than itself, and compares the acquired revision information with revision number information stored in the flash microcomputer of its own. When the acquired revision number information is the latest one, the control program of the latest revision number information is acquired and the control program stored therein is updated.

## Description

### TECHNICAL FIELD

The present invention relates to an air conditioner, an indoor unit, and an outdoor unit, that can easily rewrite a control program for controlling the operation thereof.

### BACKGROUND ART

An air conditioner is constructed, except small ones, from one or more indoor units and one outdoor unit. Conventionally, in order to control the operation of the air conditioner, the indoor unit has an electrically-erasable programmable ROM (EEPROM), in which a control program for the air conditioner is stored, and a microcomputer to execute the control program stored in the EEEPROM. When the microcomputer of the indoor unit is operated according to an operation instruction inputted from an operating section such as a remote controller, the microcomputer executes the control program read out from the EEPROM and then controls behavior of various hardwares mounted on the indoor unit, as well as sends a control signal to the outdoor unit to control the operation of the outdoor unit as necessary, and thereby, the air conditioner is operated in its entirety.

Upon developing and selling a multi-air control system having multiple indoor units and a single outdoor unit, conventionally, the system is manufactured and sold after the whole system has been designed. In addition, upon upgrading the system, new devices are designed while taking the specifications of the old system in consideration.

A control device for an air conditioner is disclosed in Patent Document 1, in which a model of an indoor unit communicatively connected to the control device is determined, the determined model information is rewritably stored therein together with updated version information of an operation control program relating to the indoor unit, a part or all of the operation control program relating to the determined indoor unit is updated, and the operation control program for the indoor unit set in a relevant outdoor unit is rewritten by the updated operation control program.

A control device for an air conditioner is disclosed in Patent Document 2, in which an operation control program of an updated version for an indoor unit and an outdoor unit is transferred to a flash memory in an ECU of the outdoor unit by connecting an external device to the ECU of the outdoor unit, a version check is carried out between the operation control program of the rewritten updated version for the indoor unit and the operation control program stored in the indoor unit, and when the versions are different, the operation control program stored in the indoor unit is rewritten to the updated version.
[Patent Document 1] Japanese Patent Application Laid-Open No. 2004-294028
[Patent Document 2] Japanese Patent Application Laid-Open No. 2002-81721

### DISCLOSURE OF THE INVENTION

### PROBLEMS TO BE SOLVED BY THE INVENTION

In a conventional air conditioner, updating the control program is not expected because updating control programs for an indoor unit and an outdoor unit requires extra effort. Therefore, when the latest designed indoor unit is made connectable to a conventional multi-air control system, the indoor unit is required to be designed to suit the specification of the conventional multi-air control system, resulting in limited design specification.

However, recently, a flash microcomputer in which a flash memory having a far faster write (rewrite) speed than the built-in EEPROM has become common, and such a flash microcomputer has also been equipped in an air conditioner. Therefore, the change of the control of an air conditioner has been desired, in which an indoor unit or an outdoor unit can easily be replaced to purchased latest indoor or outdoor units, or the latest indoor or outdoor unit can easily be added.

The present invention is made in light of the aforementioned circumstances, and aims at providing an air conditioner, in which, upon designing to add an indoor unit or an outdoor unit without limiting to the existing specifications, the control can easily be changed, and an indoor unit or an outdoor unit can easily be replaced to purchased latest indoor or outdoor units, or the latest indoor or outdoor units can easily be added.

The present invention aims at providing an indoor unit of an air conditioner, in which upon designing to add an indoor unit or an outdoor unit without limiting to the existing specifications thereof, the control can easily be changed, and an indoor unit or an outdoor unit can easily be replaced to purchased latest indoor or outdoor units, or the latest indoor or outdoor units can easily be added.

The present invention aims at providing an outdoor unit of an air conditioner, in which upon designing to add an indoor unit or an outdoor unit without limiting to the existing specifications thereof, the control can easily be changed, and an indoor unit or an outdoor unit can easily be replaced to purchased latest indoor or outdoor units, or the latest indoor or outdoor unit can easily be added.

### MEANS FOR SOLVING THE PROBLEMS

An air conditioner according to the present invention includes one or more indoor units and an outdoor unit connected to the indoor units, each of the indoor units and the outdoor unit having a first rewritable storage means for storing a control program for controlling operation thereof together with revision number information, and is **characterized in that** each of the indoor units and the outdoor unit comprises: a second rewritable storage means for storing a control program for controlling operation of at least one of the other indoor units and outdoor unit than itself together with the respective revision number information; a revision number information acquiring means for acquiring the revision number information in the first and second storage means of the at least one of the other indoor units and outdoor unit than itself, in response to a predetermined operation; a comparing means for comparing the revision number information acquired by the revision number information acquiring means and the revision number information in the first and second storage means of its own, respectively for each of the indoor units and the outdoor unit; a control program acquiring means for acquiring, when the revision number information acquired by the revision number information acquiring means is the latest one based on a result of the comparison by the comparing means, the control program corresponding to the latest revision number information; and an updating means for updating the control program in the first and/or second storage means of its own with the control program acquired by the control program acquiring means.

In this air conditioner, each of the indoor units and the outdoor unit stores a control program for controlling operation of at least one of the other indoor units and outdoor unit than itself in the second rewritable storage means together with the respective revision number information, acquires the revision number information in the first and second storage means of the at least one of the other indoor units and outdoor unit than itself, in response to a predetermined operation, compares the acquired revision number information and the revision number information in the first and second storage means of its own, respectively for each of the indoor units and the outdoor unit, acquires a control program corresponding to the acquired latest revision number information as a result of the comparison by the comparing means, and updates the control program in the first and/or second storage means of its own with the acquired control program.

An indoor unit according to the present invention is an indoor unit for an air conditioner including one or more indoor units and an outdoor unit connected to the indoor units, the indoor units and the outdoor unit having a first rewritable storage means for storing a control program for controlling operation thereof together with revision number information, and is characterized by comprising: a second rewritable storage means for storing a control program for controlling operation of at least one of the other indoor units than itself and the outdoor unit together with the respective revision number information; a revision number information acquiring means for acquiring the revision number information in the first and second storage means of the at least one of the other indoor units than itself and the outdoor unit, in response to a predetermined operation; a comparing means for comparing the revision number information acquired by the revision number information acquiring means and the revision number information in the first and second storage means of its own, respectively for each of the indoor units and the outdoor unit; a control program acquiring means for acquiring, when the revision number information acquired by the revision number information acquiring means is the latest one based on a result of the comparison by the comparing means, the control program corresponding to the latest revision number information; and an updating means for updating the control program in the first and/or second storage means of its own with the control program acquired by the control program acquiring means.

This indoor unit stores a control program for controlling operation of at least one of the other indoor units than itself and the outdoor unit in the second rewritable storage means together with the respective revision number information, acquires the revision number information in the first and second storage means of the at least one of the other indoor units than itself and the outdoor unit, in response to a predetermined operation, compares the acquired revision number information and the revision number information in the first and second storage means of its own, respectively for each of the indoor units and the outdoor unit, acquires a control program corresponding to the acquired latest revision number information as a result of the comparison by the comparing means, and updates the control program in the first and/or second storage means of its own with the acquired control program.

An outdoor unit according to the present invention is an outdoor unit for an air conditioner including one or more indoor units and an outdoor unit connected to the indoor units, the indoor units and the outdoor unit having a first rewritable storage means for storing a control program for controlling operation thereof together with revision number information, and is characterized by comprising: a second rewritable storage means for storing a control program for controlling operation of the indoor units together with the respective revision number information; a revision number information acquiring means for acquiring the revision number information in the first and second storage means of the indoor units, in response to a predetermined operation; a comparing means for comparing the revision number information acquired by the revision number information acquiring means and the revision number information in the first and second storage means of its own, respectively for each of the indoor units and the outdoor unit; a control program acquiring means for acquiring, when the revision number information acquired by the revision number information acquiring means is the latest one based on a result of the comparison by the comparing means, the control program corresponding to the latest revision number information; and an updating means for updating the control program in the first and/or second storage means of its own with the control program acquired by the control program acquiring means.

This outdoor unit stores a control program for controlling operation of the indoor units in the second rewritable storage means together with the respective revision number information, acquires the revision number information in the first and second storage means of the indoor units, in response to a predetermined operation, compares the acquired revision number information and the revision number information in the first and second storage means of its own, respectively for each of the indoor units and the outdoor unit, acquires a control program corresponding to the acquired latest revision number information as a result of the comparison by the comparing means, and updates the control program in the first and/or second storage means of its own with the acquired control program.

An air conditioner according to the present invention includes one or more indoor units of one or more types and an outdoor unit connected to the indoor units, each of the indoor units and the outdoor unit having a first rewritable storage means for storing a control program for controlling operation thereof together with revision number information, and is **characterized in that** each of the indoor units and the outdoor unit comprises: a second rewritable storage means for storing a control program for controlling operation of at least one of the other indoor units and outdoor unit than itself together with the respective revision number information; a revision number information acquiring means for acquiring the revision number information in the first and second storage means of the at least one of the other indoor units and outdoor unit than itself, in response to a predetermined operation; a comparing means for comparing the revision number information acquired by the revision number information acquiring means and the revision number information in the first and second storage means of its own, respectively for each of the indoor units of one or more types and the outdoor unit; a control program acquiring means for acquiring, when the revision number information acquired by the revision number information acquiring means is the latest one based on a result of the comparison by the comparing means, the control program corresponding to the latest revision number information; and an updating means for updating the control program in the first and/or second storage means of its own with the control program acquired by the control program acquiring means.

In this air conditioner, each of the indoor units of one or more types and the outdoor unit stores a control program for controlling operation of at least one of the other indoor units and outdoor unit than itself in the second rewritable storage means together with the respective revision number information, acquires the revision number information in the first and second storage means of the at least one of the other indoor units and outdoor unit than itself, in response to a predetermined operation, compares the acquired revision number information and the revision number information in the first and second storage means of its own, respectively for each of the indoor units of one or more types and the outdoor unit, acquires a control program corresponding to the acquired latest revision number information as a result of the comparison by the comparing means, and updates the control program in the first and/or second storage means of its own with the acquired control program.

An indoor unit according to the present invention is an indoor unit for an air conditioner including one or more indoor units of one or more types and an outdoor unit connected to the indoor units, the indoor units and the outdoor unit having a first rewritable storage means for storing a control program for controlling operation thereof together with revision number information, and is characterized by comprising: a second rewritable storage means for storing a control program for controlling operation of at least one of the other indoor units than itself and the outdoor unit together with the respective revision number information; a revision number information acquiring means for acquiring the revision number information in the first and second storage means of the at least one of the other indoor units than itself and the outdoor unit, in response to a predetermined operation; a comparing means for comparing the revision number information acquired by the revision number information acquiring means and the revision number information in the first and second storage means of its own, respectively for each of the indoor units of one or more types and the outdoor unit; a control program acquiring means for acquiring, when the revision number information acquired by the revision number information acquiring means is the latest one based on a result of the comparison by the comparing means, the control program corresponding to the latest revision number information; and an updating means for updating the control program in the first and/or second storage means of its own with the control program acquired by the control program acquiring means.

This indoor unit stores a control program for controlling operation of at least one of the other indoor units of one or more types than itself and the outdoor unit in the second rewritable storage means together with the respective revision number information, acquires the revision number information in the first and second storage means of the at least one of the other indoor units than itself and the outdoor unit, in response to a predetermined operation, compares the acquired revision number information and the revision number information in the first and second storage means of its own, respectively for each of the indoor units of one or more types and the outdoor unit, acquires a control program corresponding to the acquired latest revision number information as a result of the comparison by the comparing means, and updates the control program in the first and/or second storage means of its own with the acquired control program.

An outdoor unit according to the present invention is an outdoor unit for an air conditioner including one or more indoor units of one or more types and an outdoor unit connected to the indoor units, the indoor units and the outdoor unit having a first rewritable storage means for storing a control program for controlling operation thereof together with revision number information, and is characterized by comprising: second rewritable storage means for storing a control program for controlling operation of the indoor units together with the respective revision number information; a revision number information acquiring means for acquiring the revision number information in the first and second storage means of the indoor units, in response to a predetermined operation; a comparing means for comparing the revision number information acquired by the revision number information acquiring means and the revision number information in the first and second storage means of its own, respectively for each of the indoor units of one or more types and the outdoor unit; a control program acquiring means for acquiring, when the revision number information acquired by the revision number information acquiring means is the latest one based on a result of the comparison by the comparing means, the control program corresponding to the latest revision number information; and an updating means for updating the control program in the first and/or second storage means of its own with the control program acquired by the control program acquiring means.

This outdoor unit stores a control program for controlling operation of the indoor units of one or more types in the second rewritable storage means together with the respective revision number information, acquires the revision number information in the first and second storage means of the indoor units, in response to a predetermined operation, compares the acquired revision number information and the revision number information in the first and second storage means of its own, respectively for each of the indoor units of one or more types and the outdoor unit, acquires a control program corresponding to the acquired latest revision number information as a result of the comparison by the comparing means, and updates the control program in the first and/or second storage means of its own with the acquired control program.

In the air conditioner according to the present invention, each of the indoor units and the outdoor unit further comprises a display means for displaying that the update of the control program is ongoing, from when the predetermined operation is received until when the revision number information acquired by the revision number information acquiring means is not the latest one based on the result of the comparison, or until when the update of control program in the first and/or second storage means is completed.

The indoor unit according to the present invention further comprises a display means for displaying that the update of the control program is ongoing, from when the predetermined operation is received until when the revision number information acquired by the revision number information acquiring means is not the latest one based on the result of the comparison, or until when the update of control program in the first and/or second storage means is completed.

The outdoor unit according to the present invention further comprises a display means for displaying that the update of the control program is ongoing, from when the predetermined operation is received until when the revision number information acquired by the revision number information acquiring means is not the latest one based on the result of the comparison, or until when the update of control program in the first and/or second storage means is completed.

### EFFECTS OF THE INVENTION

According to an air conditioner of the present invention, an air conditioner, in which upon designing to add an indoor unit or an outdoor unit without limiting to the existing specifications, the control can easily be changed, and an indoor unit or an outdoor unit can easily be replaced to purchased latest indoor or outdoor units, or the latest indoor or outdoor units can easily be added, can be realized.

According to an indoor unit of the present invention, an indoor unit of an air conditioner, in which upon designing to add an indoor unit or an outdoor unit without limiting to the existing specifications thereof, the control can easily be changed, and an indoor unit or an outdoor unit can easily be replaced to purchased latest indoor or outdoor units, or the latest indoor or outdoor units can be easily added, can be realized.

According to an outdoor unit of the present invention, an outdoor unit of an air conditioner, in which upon designing to add an indoor unit or an outdoor unit without limiting to the existing specifications thereof, the control can easily be changed, and an indoor unit or an outdoor unit can be easily replaced to purchased latest indoor or outdoor units, or the latest indoor or outdoor units can be easily added, can be realized.

### BRIEF DESCRIPTION OF THE DRAWINGS

FIG. 1 is a block diagram showing a configuration of a substantial portion of an embodiment of an air conditioner, indoor units, and an outdoor unit according to the present invention;
FIG. 2 is a block diagram showing an example of an internal configuration of a flash microcomputer shown in FIG. 1;
FIG. 3 is an explanatory diagram showing a combination example of a control program stored in the flash microcomputer;
FIG. 4 is an explanatory diagram showing a combination example of a control program stored in the flash microcomputer;
FIG. 5 is an explanatory diagram showing a combination example of a control program stored in the flash microcomputer;
FIG. 6 is an explanatory diagram showing a combination example of a control program stored in the flash microcomputer;
FIG. 7 is an explanatory diagram showing a combination example of a control program stored in the flash microcomputer;
FIG. 8 is an explanatory diagram showing a combination example of a control program stored in the flash microcomputer;
FIG. 9 is a flowchart showing an example of procedure of the flash microcomputer of the indoor units and the outdoor unit of the air conditioner according to the present invention;
FIG. 10 is a flowchart showing an example of procedure of the flash microcomputer of the indoor units and the outdoor unit of the air conditioner according to the present invention;
FIG. 11 is a flowchart showing an example of procedure of the flash microcomputer of the indoor units and the outdoor unit of the air conditioner according to the present invention;
FIG. 12 is a flowchart showing an example of procedure of the flash microcomputer of the indoor units and the outdoor unit of the air conditioner according to the present invention;
FIG. 13 is a flowchart showing an example of procedure of the flash microcomputer of the indoor units and the outdoor unit of the air conditioner according to the present invention;
FIG. 14 is a flowchart showing an example of procedure of the flash microcomputer of the indoor units and the outdoor unit of the air conditioner according to the present invention; and
FIG. 15 is a flowchart showing an example of procedure of the flash microcomputer of the indoor units and the outdoor unit of the air conditioner according to the present invention.

### DESCRIPTION OF THE NUMERALS

- 1: Outdoor Unit
- 2: Floor-and-Ceiling-Type Indoor Unit
- 3: Duct-Type Indoor Unit
- 4: Ceiling-Embedded-Cassette-Type Indoor Unit
- 5: Floor-Mount-Type Indoor Unit
- 6: Wall-Mount-Type Indoor Unit
- 11-16: Control Circuit
- 21-26: Flash Microcomputer
- 31-36: Update Switch
- 41-46: Indication Lamp (Display Means)
- 51: CPU
- 52: Flash Memory
- 53: Communication Program Storage Area
- 54: Control Program Storage Area (First Storage Means)
- 57: Other Unit Control Program Storage Area (Second Storage Means)

### BEST MODES FOR IMPLEMENTING THE INVENTION

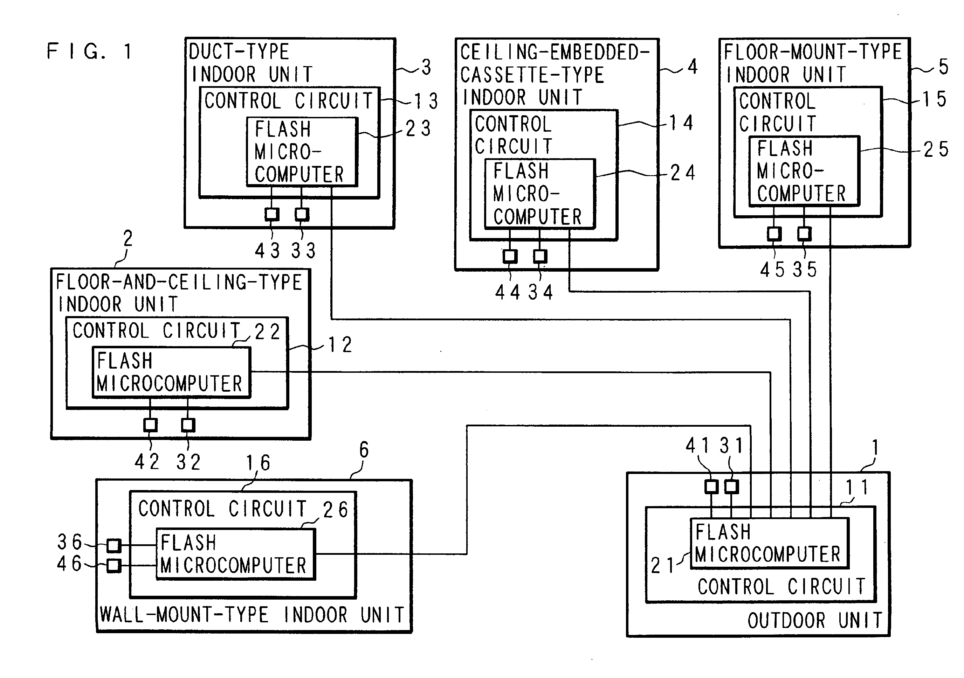

The present invention will be described below on the basis of drawings showing embodiments thereof. FIG. 1 is a block diagram showing a configuration of a substantial portion of an embodiment of an air conditioner, indoor units, and an outdoor unit according to the present invention. The air conditioner includes a wall-mount-type indoor unit 6, a floor-mount-type indoor unit 5, a ceiling-embedded-cassette-type indoor unit 4 that is a cassette type unit embedded in a ceiling, a duct-type indoor unit 3 that is embedded in a ceiling and sends air by use of a duct, a floor-and-ceiling-type indoor unit 2 that can be used for both floor-mount-type and ceiling-embedded-cassette-type, and an outdoor unit 1 installed outside the room.

The outdoor unit 1 includes a flash microcomputer 21 storing a control program for controlling its operation and control programs for controlling operations of the indoor units 2-6 (not used for control of the outdoor unit 1), in a control circuit 11. In addition, the outdoor unit 1 includes an update switch 31 for instructing to update each control program stored in the flash microcomputer 21, and an indication lamp (display means) 41 for informing that update of the control program is ongoing. The flash microcomputer 21 stores the control programs in a built-in flash memory (described later).

The floor-and-ceiling-type indoor unit 2 includes a flash microcomputer 22 storing a control program for controlling its operation and control programs for controlling operations of the indoor units 3-6 and the outdoor unit 1 (not used for control of the indoor unit 2), in a control circuit 12. In addition, the floor-and-ceiling-type indoor unit 2 includes an update switch 32 for instructing to update each control program stored in the flash microcomputer 22, and an indication lamp (display means) 42 for informing that update of the control program is ongoing. The flash microcomputer 22 stores the control programs in a built-in flash memory (described later).

The duct-type indoor unit 3 includes a flash microcomputer 23 storing a control program for controlling its operation and control programs for controlling operations of the indoor units 2, 4-6 and the outdoor unit 1 (not used for control of the indoor unit 3), in a control circuit 13. In addition, the duct-type indoor unit 3 includes an update switch 33 for instructing to update each control program stored in the flash microcomputer 23, and an indication lamp (display means) 43 for informing that update of the control program is ongoing. The flash microcomputer 23 stores control programs in a built-in flash memory (described later).

The ceiling-embedded-cassette-type indoor unit 4 includes a flash microcomputer 24 storing a control program for controlling its operation and control programs for controlling operations of the indoor units 2, 3, 5, and 6 and the outdoor unit 1 (not used for control of the indoor unit 4), in a control circuit 14. In addition, the ceiling-embedded-cassette-type indoor unit 4 includes an update switch 34 for instructing to update each control program stored in the flash microcomputer 24, and an indication lamp (display means) 44 for informing that update of the control program is ongoing. The flash microcomputer 24 stores control programs in a built-in flash memory (described later).

The floor-mount-type indoor unit 5 includes a flash microcomputer 25 storing a control program for controlling its operation and control programs for controlling operations of the indoor units 2-4, and 6 and the outdoor unit 1 (not used for control of the indoor unit 5), in a control circuit 15. In addition, the floor-mount-type indoor unit 5 includes an update switch 35 for instructing to update each control program stored in the flash microcomputer 25, and an indication lamp (display means) 45 for informing that update of the control program is ongoing. The flash microcomputer 25 stores control programs in a built-in flash memory (described later).

The wall-mount-type indoor unit 6 includes a flash microcomputer 26 storing a control program for controlling its operation and control programs for controlling operations of the indoor units 2-5 and the outdoor unit 1 (not used for control of the indoor unit 6), in a control circuit 16. In addition, the wall-mount-type indoor unit 6 includes an update switch 36 for instructing to update each control program stored in the flash microcomputer 26, and an indication lamp (display means) 46 for informing that update of the control program is ongoing. The flash microcomputer 26 stores control programs in a built-in flash memory (described later).

The flash microcomputer 21 of the outdoor unit 1 is connected with the flash microcomputers 22-26 of the indoor units 2-6 by a respective code to perform communication between the flash microcomputer 21 and the flash microcomputers 22-26. In addition, one of the flash microcomputers 22-26 of the indoor units 2-6 performs communication with the other flash microcomputers 22-26 of the other indoor units 2-6 through the flash microcomputer 21 of the outdoor unit 1.

Meanwhile, for the configuration of FIG. 1, a single unit for each of the indoor units 2-6 is described, however, the operation is similar for both cases of being provided with one or more indoor units 2-6 and of having one indoor unit.

An update of the control program is, for example, performed in the cases such as addition of more indoor units 2-6, replacement of the indoor units 2-6 to new models, replacement of the outdoor unit 1 to a new model.

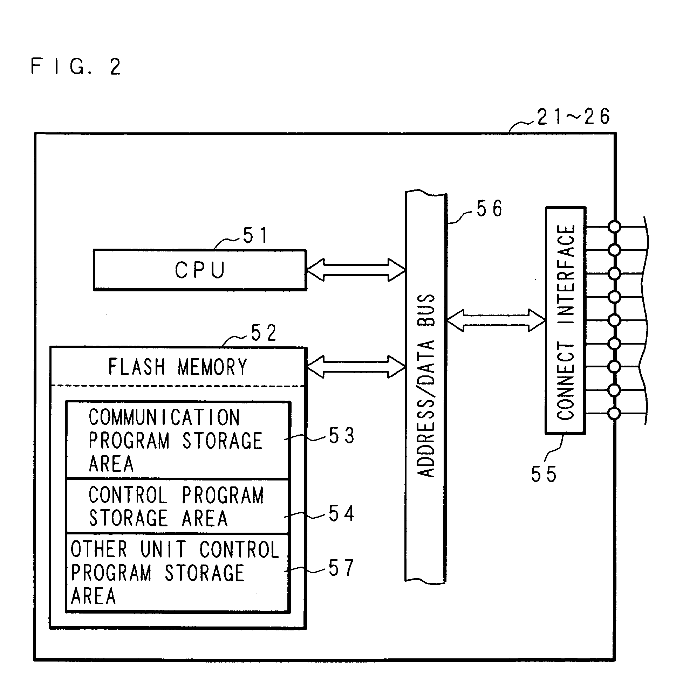

FIG. 2 is a block diagram showing an example of an internal configuration of the flash microcomputers 21-26 shown in FIG. 1. The flash microcomputers 21-26 respectively include a CPU 51 for performing various arithmetic processes, and a flash memory 52 for storing data, such as communication program and control program, necessary for controlling the operation of the outdoor unit 1 and indoor units 2-6. In addition, each of the flash microcomputers 21-26 includes a connect interface 55 which is connected to the CPU 51 and the flash memory 52 through an address/data bus 56, and which is connected to devices such as the other flash microcomputers 21-26, a motor drive circuit (not shown) that is controlled by the flash microcomputer 21-26 themselves, and an operation switch.

The CPU 51 controls the operations of the outdoor unit 1 and the indoor units 2-6 equipped with the flash microcomputers 21-26 in accordance with the control programs stored in the flash memory 52. The flash memory 52 is a storage rewritable means, and a portion of the storage area may be utilized as a communication program storage area 53 storing a communication program for performing communication to a device connected through the connect interface 55. In addition, the flash memory 52 is utilized as a control program storage area (first storage means) 54, which stores a control program for controlling the operation of the outdoor unit 1 or the indoor units 2-6 equipped with the flash microcomputers 21-26, and an other unit control program storage area (second storage means) 57, which stores the control programs for controlling the operations of the other outdoor unit 1 and indoor units 2-6 than itself.

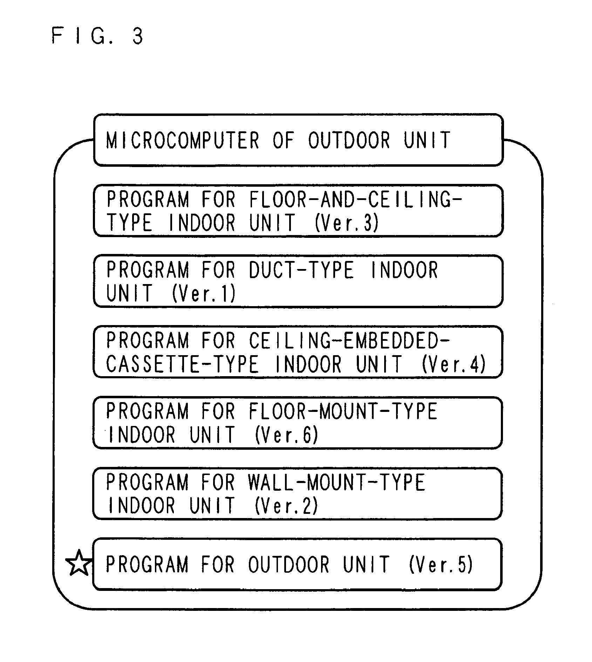

In the flash microcomputer 21 of the outdoor unit 1, for example, as shown in FIG. 3, a control program for the outdoor unit 1 (Ver.5) is stored in the control program storage area 54. In addition, the other unit control program storage area 57 stores a control program for the floor-and-ceiling-type indoor unit 2 (Ver.3), a control program for the duct-type-indoor unit 3 (Ver.1), a control program for the ceiling-embedded-cassette-type indoor unit 4 (Ver.4), a control program for the floor-mount-type indoor unit 5 (Ver.6), and a control program for the wall-mount-type indoor unit 6 (Ver.2).

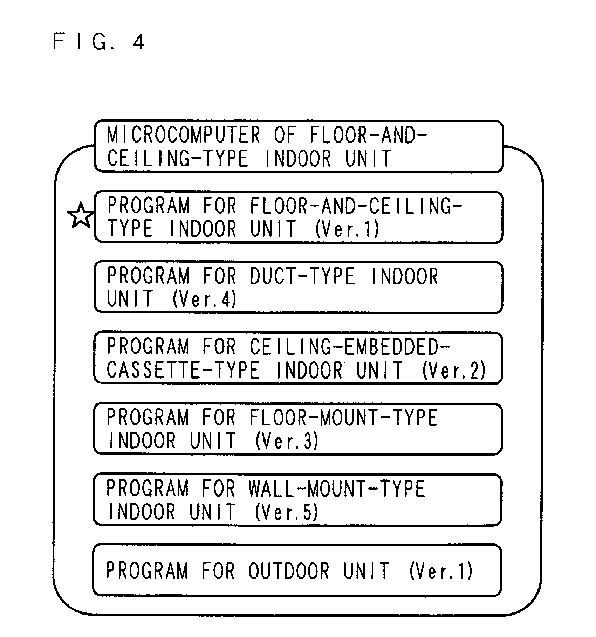

In the flash microcomputer 22 of the floor-and-ceiling-type indoor unit 2, for example, as shown in FIG. 4, a control program for the floor-and-ceiling-type indoor unit 2 (Ver.1) is stored in the control program storage area 54. In addition, the other unit control program storage area 57 stores a control program for the duct-type indoor unit 3 (Ver.4), a control program for the ceiling-embedded-cassette-type indoor unit 4 (Ver.2), a control program for the floor-mount-type indoor unit 5 (Ver.3), a control program for the wall-mount-type indoor unit 6 (Ver.5), and a control program for the outdoor unit 1 (Ver.1).

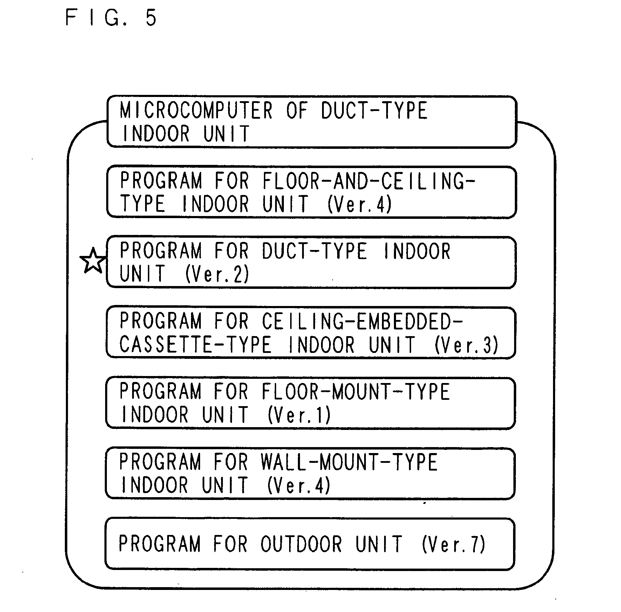

In the flash microcomputer 23 of the duct-type indoor unit 3, for example, as shown in FIG. 5, a control program for the duct-type indoor unit 3 (Ver.2) is stored in the control program storage area 54. In addition, the other unit control program storage area 57 stores a control program for the floor-and-ceiling-type indoor unit 2 (Ver.4), a control program for the ceiling-embedded-cassette-type indoor unit 4 (Ver.3), a control program for the floor-mount-type indoor unit 5 (Ver.1), a control program for the wall-mount-type indoor unit 6 (Ver.4), and a control program for the outdoor unit 1 (Ver.7).

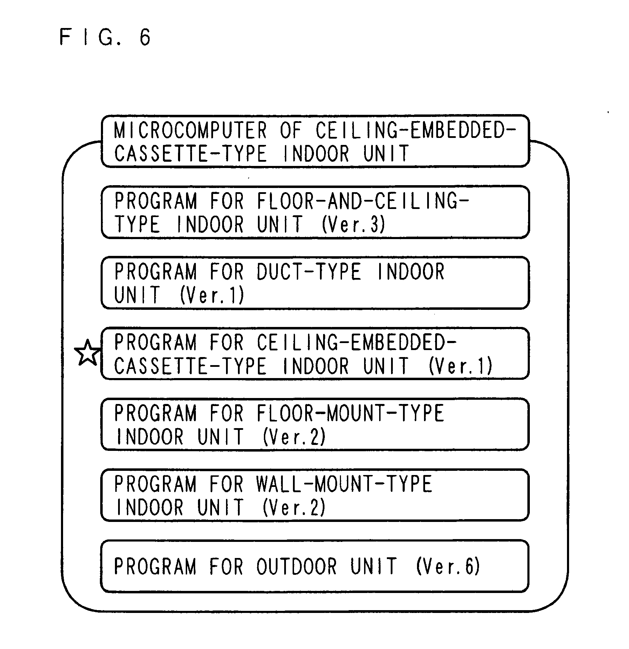

In the flash microcomputer 24 of the ceiling-embedded-cassette-type indoor unit 4, for example, as shown in FIG. 6, a control program for the ceiling-embedded-cassette-type indoor unit 4 (Ver.1) is stored in the control program storage area 54. In addition, the other unit control program storage area 57 stores a control program for the floor-and-ceiling-type indoor unit 2 (Ver.3), a control program for the duct-type indoor unit 3 (Ver.1), a control program for the floor-mount-type indoor unit 5 (Ver.2), a control program for the wall-mount-type indoor unit 6 (Ver.2), and a control program for the outdoor unit 1 (Ver.6).

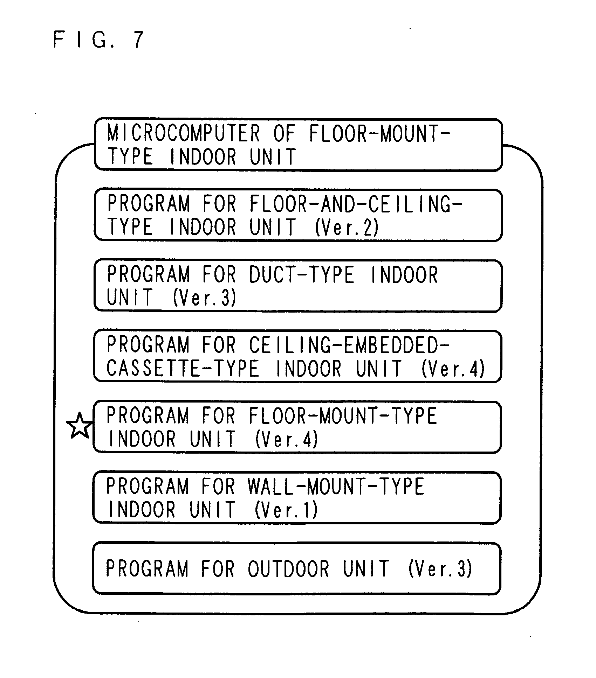

In the flash microcomputer 25 of the floor-mount-type indoor unit 5, for example, as shown in FIG. 7, a control program for the floor-mount-type indoor unit 5 (Ver.4) is stored in the control program storage area 54. In addition, the other unit control program storage area 57 stores a control program for the floor-and-ceiling-type indoor unit 2 (Ver.2), a control program for the duct-type indoor unit 3 (Ver.3), a control program for the ceiling-embedded-cassette-type indoor unit 4 (Ver.4), a control program for the wall-mount-type indoor unit 6 (Ver.1), and a control program for the outdoor unit 1 (Ver.3).

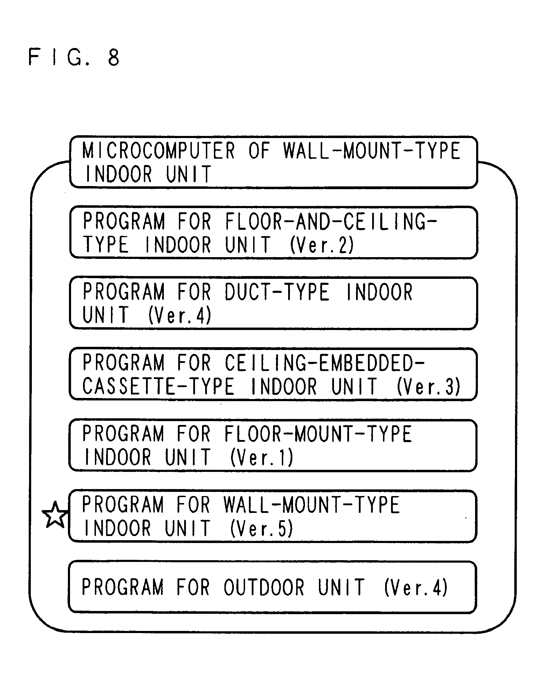

In the flash microcomputer 26 of the wall-mount-type indoor unit 6, for example, as shown in FIG. 8, a control program for the wall-mount-type indoor unit 6 (Ver.5) is stored in the control program storage area 54. In addition, the other unit control program storage area 57 stores a control program for the floor-and-ceiling-type indoor unit 2 (Ver.2), a control program for the duct-type indoor unit 3 (Ver.4), a control program for the ceiling-embedded-cassette-type indoor unit 4 (Ver.3), a control program for the ffoor-mount-type indoor unit 5 (Ver.1), and a control program for the outdoor unit 1 (Ver.4).

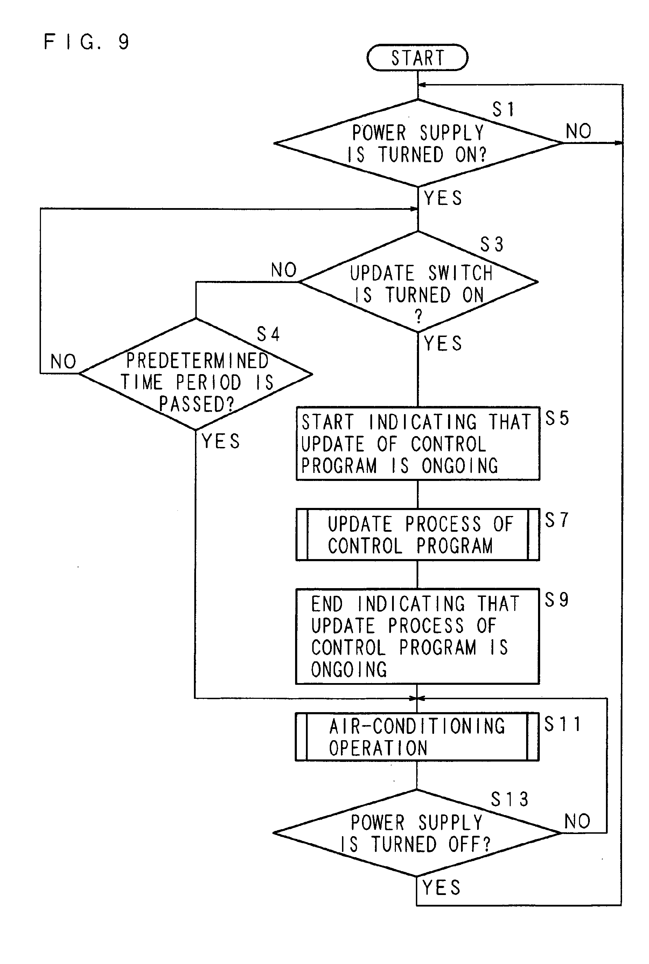

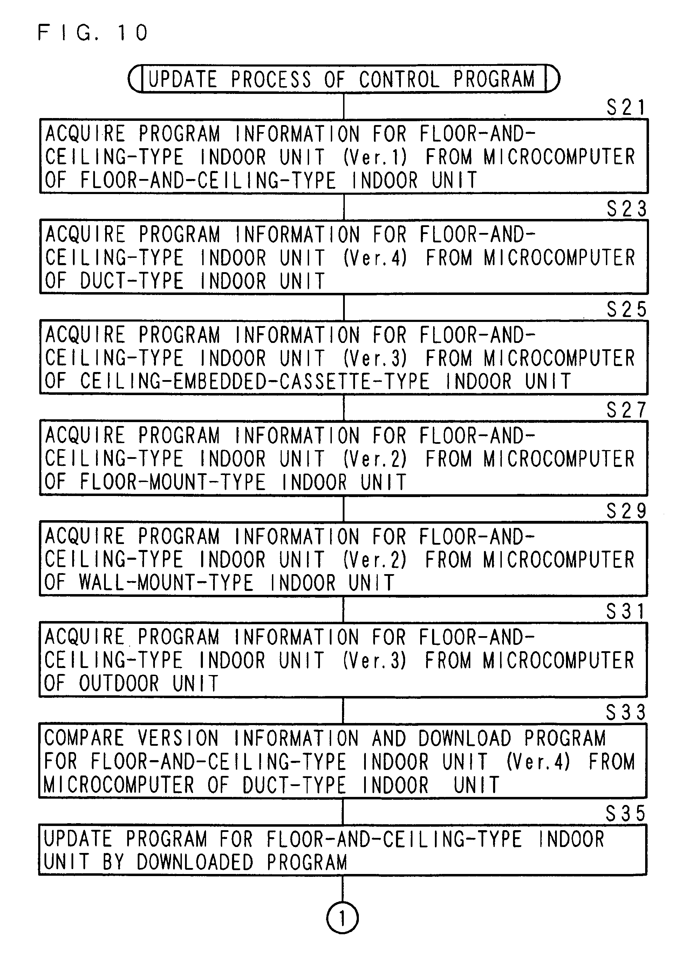

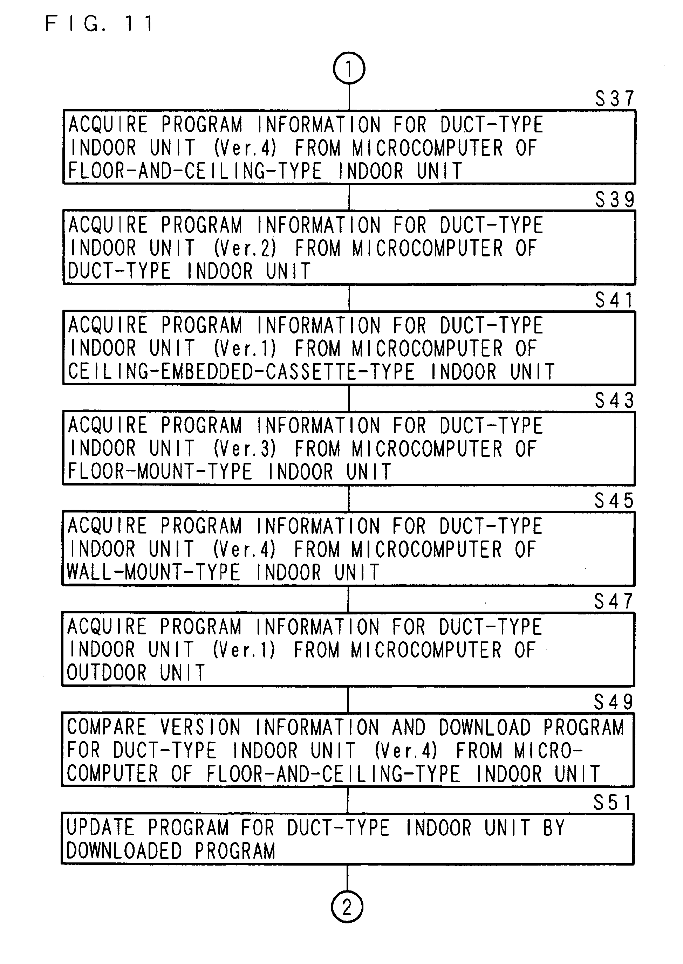

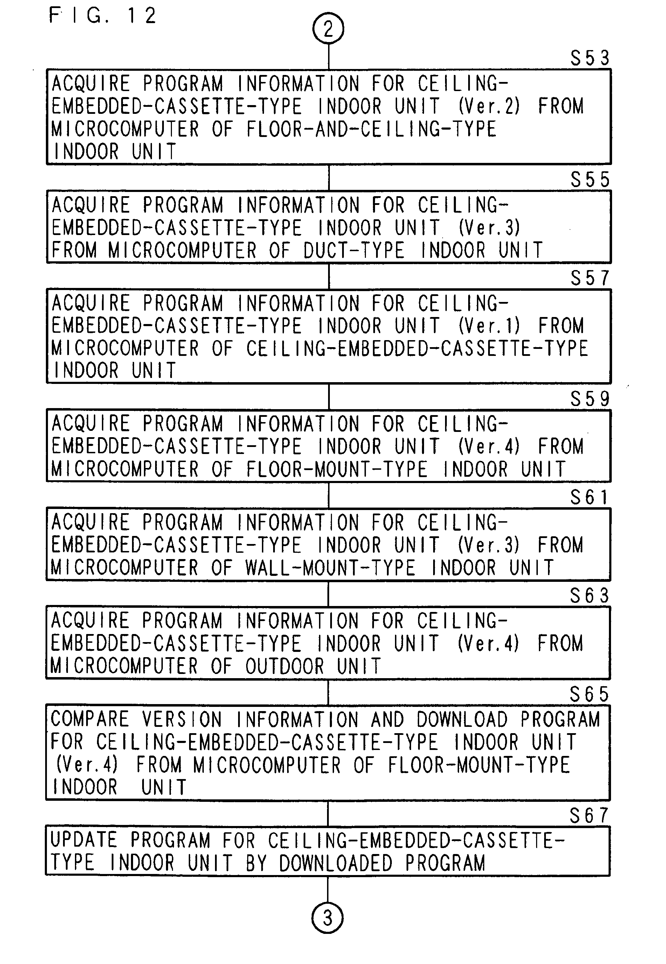

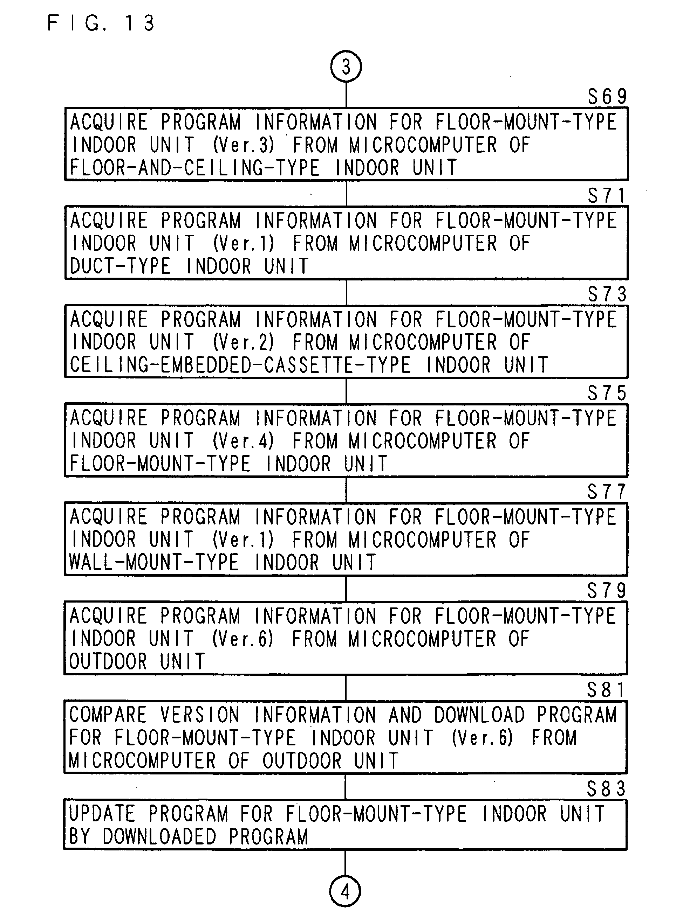

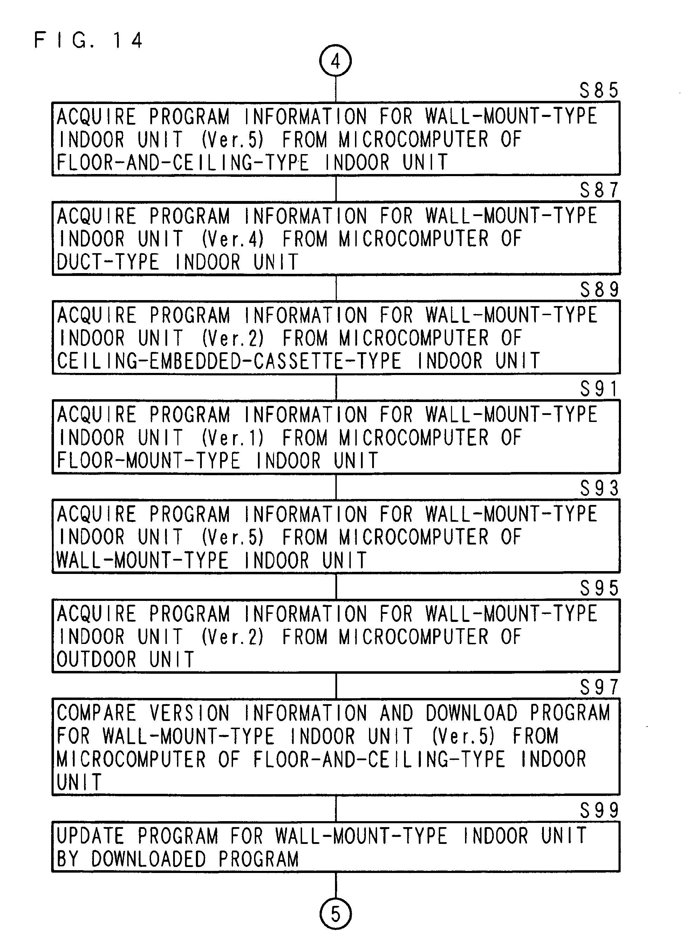

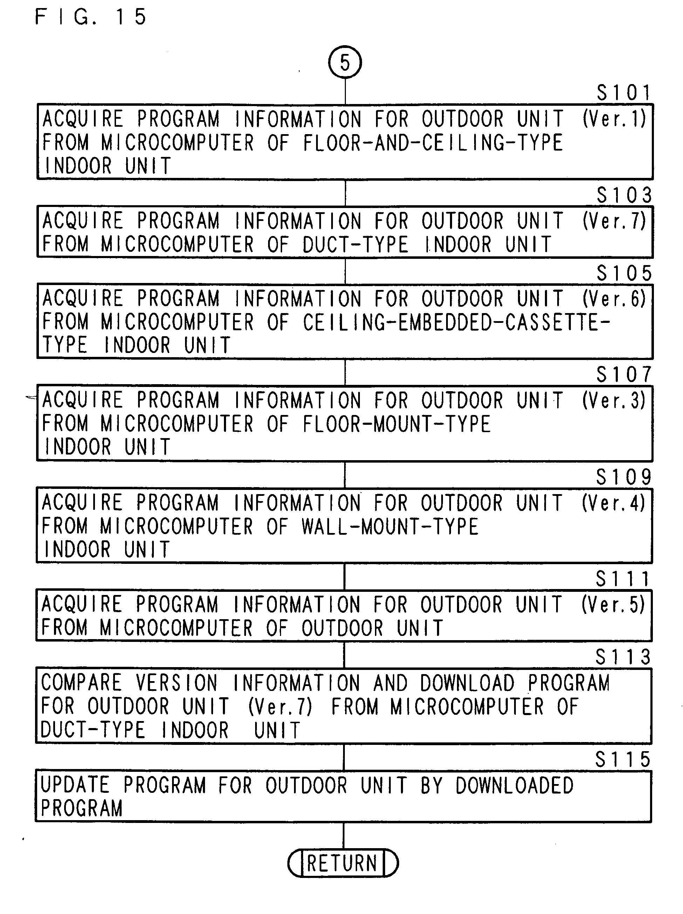

An operation of the flash microcomputers 21-26 of the indoor units and outdoor unit for the air conditioner having the above-described configuration will be described below with reference to the flowcharts of FIG. 9 to FIG. 15 illustrating the procedure.

The flash microcomputers 21-26 are instructed to start the operation by a remote controller (not shown) and the like, and a power supply of the indoor units 2-6 or the outdoor unit 1 equipped with the flash microcomputers 21-26 is turned ON (S1). When each of update switches 31-36 of the indoor units 2-6 or the outdoor unit 1 is turned ON (S3) within a predetermined time period (e.g., a few seconds) (S4), illumination of indication lamps 41-46, which is indicating that update of the control program is ongoing, is started (S5), and an update process is then executed (S7). In this embodiment, turning ON the update switches 31-36 within the predetermined time period (e.g., a few seconds) may be a "predetermined operation" described in the claims.

After executing the update process of the control program (S7), the flash microcomputers 21-26 turn OFF the indication lamps (S9), a preset air-conditioning operation is performed (S11). When the power supply of the indoor units 2-6 or the outdoor unit 1 equipped with the flash microcomputers 21-26 is turned OFF (S13), the air-conditioning operation is then stopped, and the flash microcomputers 21-26 stand by until the power supply is turned ON (S1). When each of update switches 31-36 is not turned ON within the predetermined time period, the flash microcomputers 21-26 perform a preset air-conditioning operation (S11). When the power supply of the indoor units 2-6 or the outdoor unit 1 equipped with the flash microcomputers 21-26 is turned OFF (S13), the air-conditioning operation is stopped, and the flash microcomputers 21-26 stand by until the power supply is turned ON (S1).

At the time of the update process of the control program (S7), first, the flash microcomputers 21-26 acquire control program information for the floor-and-ceiling-type indoor unit 2 (Ver.1) from the flash microcomputer 22 of the floor-and-ceiling-type indoor unit 2 (S21), and acquire control program information for the floor-and-ceiling-type indoor unit 2 (Ver.4) from the flash microcomputer 23 of the duct-type indoor unit 3 (S23). Then, the flash microcomputers 21-26 acquire control program information for the floor-and-ceiling-type indoor unit 2 (Ver.3) from the flash microcomputer 24 of the ceiling-embedded-cassette-type indoor unit 4 (S25), and acquire control program information for the floor-and-ceiling-type indoor unit 2 (Ver.2) from the flash microcomputer 25 of the floor-mount-type indoor unit 5 (S27). Then, the flash microcomputers 21-26 acquire control program information for the floor-and-ceiling-type indoor unit 2 (Ver.2) from the flash microcomputer 26 of the wall-mount-type indoor unit 6 (S29), and acquire control program information for the floor-and-ceiling-type indoor unit 2 (Ver.3) from the flash microcomputer 21 of the outdoor unit 1 (S31).

The flash microcomputers 21-26 compare the version (revision number) information of the acquired control program information and download a control program for the floor-and-ceiling-type indoor unit 2 (Ver.4), which is the latest version, from the flash microcomputer 23 of the duct-type indoor unit 3 (S33). Then, the flash microcomputers 21-26 update the control program for the floor-and-ceiling-type indoor unit 2 in the control program storage area 54 or the other unit control program storage area 57 by the downloaded control program for the floor-and-ceiling-type indoor unit 2 (Ver.4) (S35).

Meanwhile, the flash microcomputers 21-26 compare the version information of the acquired control program information. When the control program which is the latest version is stored in the control program storage area 54 or the other unit control program storage area 57 of their own, the flash microcomputers 21-26 do not perform the update of the control program.

Then, the flash microcomputers 21-26 acquire control program information for the duct-type indoor unit 3 (Ver.4) from the flash microcomputer 22 of the floor-and-ceiling-type indoor unit 2 (S37), and acquire control program information for the duct-type indoor unit 3 (Ver.2) from the flash microcomputer 23 of the duct-type indoor unit 3 (S39). Then, the flash microcomputers 21-26 acquire control program information for the duct-type indoor unit 3 (Ver.1) from the flash microcomputer 24 of the ceiling-embedded-cassette-type indoor unit 4 (S41), and acquire control program information for the duct-type indoor unit 3 (Ver.3) from the flash microcomputer 25 of the floor-mount-type indoor unit 5 (S43). The flash microcomputers 21-26 then acquire control program information for the duct-type indoor unit 3 (Ver.4) from the flash microcomputer 26 of the wall-mount-type indoor unit 6 (S45), and acquire control program information for the duct-type indoor unit 3 (Ver.1) from the flash microcomputer 21 of the outdoor unit 1 (S47).

The flash microcomputers 21-26 compare the version information of the acquired control program information and download a control program for the duct-type indoor unit 3 (Ver.4), which is the latest version, from the flash microcomputer 22 of the floor-and-ceiling-type indoor unit 2 (S49). Then, the flash microcomputers 21-26 update the control program for the duct-type indoor unit 3 in the control program storage area 54 or the other unit control program storage area 57 by the downloaded control program for the duct-type indoor unit 3 (Ver.4) (S51).

The flash micro computers 21-26 then acquire control program information for the ceiling-embedded-cassette-type indoor unit 4 (Ver.2) from the flash microcomputer 22 of the floor-and-ceiling-type indoor unit 2 (S53), and acquire control program information for the ceiling-embedded-cassette-type indoor unit 4 (Ver.3) from the flash microcomputer 23 of the duct-type indoor unit 3 (S55). Then, the flash microcomputers 21-26 acquire control program information for the ceiling-embedded-cassette-type indoor unit 4 (Ver.1) from the flash microcomputer 24 of the ceiling-embedded-cassette-type indoor unit 4 (S57), and acquire control program information for the ceiling-embedded-cassette-type indoor unit 4 (Ver.4) from the flash microcomputer 25 of the floor-mount-type indoor unit 5 (S59). Then, the flash microcomputers 21-26 acquire control program information for the ceiling-embedded-cassette-type indoor unit 4 (Ver.3) from the flash microcomputer 26 of the wall-mount-type indoor unit 6 (Ver.3) (S61), and acquire control program information for the ceiling-embedded-cassette-type indoor unit 4 (Ver.4) from the flash microcomputer 21 of the outdoor unit 1 (S63).

The flash microcomputers 21-26 compare the version information of the acquired control program information and download a control program for the ceiling-embedded-cassette-type indoor unit 4 (Ver.4), which is the latest version, from the flash microcomputer 22 of the floor-and-ceiling-type indoor unit 2 (S65). Then, the flash microcomputers 21-26 update a control program for the ceiling-embedded-cassette-type indoor unit 4 in the control program storage area 54 or the other unit control program storage area 57 by the downloaded control program for the ceiling-embedded-cassette-type indoor unit 4 (Ver.4) (S67).

Then, the flash microcomputers 21-26 acquire control program information for the floor-mount-type indoor unit 5 (Ver.3) from the flash microcomputer 22 of the floor-and-ceiling-type indoor unit 2 (S69), and acquire control program information for the floor-mount-type indoor unit 5 (Ver.1) from the flash microcomputer 23 of the duct-type indoor unit 3 (S71). Then, the flash microcomputers 21-26 acquire control program information for the floor-mount-type indoor unit 5 (Ver.2) from the flash microcomputer 24 of the ceiling-embedded-cassette-type indoor unit 4 (S73), and acquire control program information for the floor-mount-type indoor unit 5 (Ver.4) from the flash microcomputer 25 of the floor-mount-type indoor unit 5 (S75). Then, the flash microcomputers 21-26 acquire control program information for the floor-mount-type indoor unit 5 (Ver.1) from the flash microcomputer 26 of the wall-mount-type indoor unit 6 (S77), and acquire control program information for the floor-mount-type indoor unit 5 (Ver.6) from the flash microcomputer 21 of the outdoor unit 1 (S79).

The flash microcomputers 21-26 compare the version information of the acquired control program information and download a control program for the floor-mount-type indoor unit 5 (Ver.6), which is the latest version, from the flash microcomputer 21 of the outdoor unit 1 (S81). Then, the flash microcomputers 21-26 update a control program for the floor-mount-type indoor unit 5 in the control program storage area 54 or the other unit control program storage area 57 by the downloaded control program for the floor-mount-type indoor unit 5 (Ver.6) (S83).

Then, the flash microcomputers 21-26 acquire control program information for the wall-mount-type indoor unit 6 (Ver.5) from the flash microcomputer 22 of the floor-and-ceiling-type indoor unit 2 (S85), and acquire control program information for the wall-mount-type indoor unit 6 (Ver.4) from the flash microcomputer 23 of the duct-type indoor unit 3 (S87). Then, the flash microcomputers 21-26 acquire control program information for the wall-mount-type indoor unit 6 (Ver.2) from the flash microcomputer 24 of the ceiling-embedded-cassette-type indoor unit 4 (S89), and acquire control program information for the wall-mount-type indoor unit 6 (Ver.1) from the flash microcomputer 25 of the floor-mount-type indoor unit 5 (S91). Then, the flash microcomputers 21-26 acquire control program information for the wall-mount-type indoor unit 6 (Ver.5) from the flash microcomputer 26 of the wall-mount-type indoor unit 6 (S93), and acquire control program information for the wall-mount-type indoor unit 6 (Ver.2) from the flash microcomputer 21 of the outdoor unit 1 (S95).

The flash microcomputers 21-26 compare the version information of the acquired control program information and download a control program for the wall-mount-type indoor unit 6 (Ver.5), which is the latest version, from the flash microcomputer 22 of the floor-and-ceiling-type indoor unit 2 or the flash microcomputer 26 of the wall-mount-type indoor unit 6 (S97). Then, the flash microcomputers 21-26 update a control program for the wall-mount-type indoor unit 6 in the control program storage area 54 or the other unit control program storage area 57 by the downloaded control program for the wall-mount-type indoor unit 6 (Ver.5) (S99).

Then, the flash microcomputers 21-26 acquire control program information for the outdoor unit 1 (Ver.1) from the flash microcomputer 22 of the floor-and-ceiling-type indoor unit 2 (S101), and acquire control program information for the outdoor unit 1 (Ver.7) from the flash microcomputer 23 of the duct-type indoor unit 3 (S103). Then, the flash microcomputers 21-26 acquire control program information for the outdoor unit 1 (Ver.6) from the flash microcomputer 24 of the ceiling-embedded-cassette-type indoor unit 4 (S105), and acquire control program information for the outdoor unit 1 (Ver.3) from the flash microcomputer 25 of the floor-mount-type indoor unit 5 (S107). Then, the flash microcomputers 21-26 acquire control program information for the outdoor unit 1 (Ver.4) from the flash microcomputer 26 of the wall-mount-type indoor unit 6, and acquire control program information for the outdoor unit 1 (Ver.5) from the flash microcomputer 21 of the outdoor unit 1 (S111).

The flash microcomputers 21-26 compare the version information of the acquired control program information and download a control program for the outdoor unit 1 (Ver.7), which is the latest version, from the flash microcomputer 23 of the duct-type indoor unit 3 (S113). Then, The flash microcomputers 21-26 update a control program for the outdoor unit 1 in the control program storage area 54 or the other unit control program storage area 57 by the downloaded control program for the outdoor unit 1 (Ver.7) (S115), and the procedure is returned.

As a result of the above description, an air conditioner, and an indoor unit and an outdoor unit thereof, in which an indoor unit or an outdoor unit for addition can be designed without being limited by existing specifications, the contents of control can easily be changed, and the latest indoor unit and outdoor unit are purchased and can easily be replaced or added, can be realized.

As a result of the above description, an air conditioner, and an indoor unit and an outdoor unit thereof, in which an indoor unit or an outdoor unit for addition can be designed without being limited by existing specifications, the contents of control can easily be changed, the ongoing change is visible, and the latest indoor unit and outdoor unit are purchased and can easily be replaced or added, can be realized.

Meanwhile, as a modified example of the embodiment, only control program version (revision number) information, which is the same type of the program as its own control program, is acquired from different types of indoor units and outdoor units, and then, the control program storage area (first storage means) 54 may be updated by control program update routine. For example, explanation is made on the case where its own is the floor-and-ceiling-type indoor unit 2.

The flash microcomputer 22 of the floor-and-ceiling-type indoor unit 2 acquires version information of a control program for the floor-and-ceiling-type indoor unit 2 (Ver.1), and acquires version information of a control program for the floor-and-ceiling-type indoor unit 2 (Ver.4) from the flash microcomputer 23 of the duct-type indoor unit 3. Then, the flash microcomputer 22 acquires version information of a control program for the floor-and-ceiling-type indoor unit 2 (Ver.3) from the flash microcomputer 24 of the ceiling-embedded-cassette-type indoor unit 4, and acquires version information of a control program for the floor-and-ceiling-type indoor unit 2 (Ver.2) from the flash microcomputer 25 of the floor-mount-type indoor unit 5. Then, the flash microcomputer 22 acquires version information of a control program for the floor-and-ceiling-type indoor unit 2 (Ver.2) from the flash microcomputer 26 of the wall-mount-type indoor unit 6, and acquires version information of a control program for the floor-and-ceiling-type indoor unit 2 (Ver.3) from the flash microcomputer 21 of the outdoor unit 1.

The flash microcomputer 22 compares version information of the control program acquired as described above, and downloads a control program for the floor-and-ceiling-type indoor unit 2 (Ver.4), which is the latest version, from the flash microcomputer 23 of the duct-type indoor unit 3. Then a control program for the floor-and-ceiling-type indoor unit 2 in the control program storage area 54 is updated by the downloaded control program for the floor-and-ceiling-type indoor unit 2 (Ver.4).

The following can be acceptable as other embodiments. That is, the start of an operation is instructed by a remote controller and the like without providing the update switches 31-36. When the power supply of the indoor units 2-6 or the outdoor unit 1 is turned ON, the flash microcomputer automatically acquires at least any one version (revision number) information in the control program storage area 54 of the indoor unit and the outdoor unit other than its own and the other unit control program storage area 57. In this case, instructing to start an operation and turning on the power may be a "predetermined operation" described in the claims.

Then, the flash microcomputer compares the acquired version information of the control program. When the latest version is present, the update process is performed. After the update process is completed, the procedure is moved on to a cooling and heating operation, a dehumidification operation, and the like. When the latest version is not present, the procedure is moved on to a cooling and heating operation, a dehumidification operation, and the like.

## Claims

1. An air conditioner including one or more indoor units and an outdoor unit connected to the indoor units, each of the indoor units and the outdoor unit having a first rewritable storage means for storing a control program for controlling operation thereof together with revision number information, the air conditioner being **characterized in that** each of the indoor units and the outdoor unit comprises:
a second rewritable storage means for storing a control program for controlling operation of at least one of the other indoor units and outdoor unit than itself together with the respective revision number information;
a revision number information acquiring means for acquiring the revision number information in the first and second storage means of the at least one of the other indoor units and outdoor unit than itself, in response to a predetermined operation;
a comparing means for comparing the revision number information acquired by the revision number information acquiring means and the revision number information in the first and second storage means of its own, respectively for each of the indoor units and the outdoor unit;
a control program acquiring means for acquiring, when the revision number information acquired by the revision number information acquiring means is the latest one based on a result of the comparison by the comparing means, the control program corresponding to the latest revision number information; and
an updating means for updating the control program in the first and/or second storage means of its own with the control program acquired by the control program acquiring means.

2. An indoor unit for an air conditioner including one or more indoor units and an outdoor unit connected to the indoor units, the indoor units and the outdoor unit having a first rewritable storage means for storing a control program for controlling operation thereof together with revision number information, the indoor unit being **characterized by** comprising:
a second rewritable storage means for storing a control program for controlling operation of at least one of the other indoor units than itself and the outdoor unit together with the respective revision number information;
a revision number information acquiring means for acquiring the revision number information in the first and second storage means of the at least one of the other indoor units than itself and the outdoor unit, in response to a predetermined operation;
a comparing means for comparing the revision number information acquired by the revision number information acquiring means and the revision number information in the first and second storage means of its own, respectively for each of the indoor units and the outdoor unit;
a control program acquiring means for acquiring, when the revision number information acquired by the revision number information acquiring means is the latest one based on a result of the comparison by the comparing means, the control program corresponding to the latest revision number information; and
an updating means for updating the control program in the first and/or second storage means of its own with the control program acquired by the control program acquiring means.

3. An outdoor unit for an air conditioner including one or more indoor units and an outdoor unit connected to the indoor units, the indoor units and the outdoor unit having a first rewritable storage means for storing a control program for controlling operation thereof together with revision number information, the outdoor unit being **characterized by** comprising:
a second rewritable storage means for storing a control program for controlling operation of the indoor units together with the respective revision number information;
a revision number information acquiring means for acquiring the revision number information in the first and second storage means of the indoor units, in response to a predetermined operation;
a comparing means for comparing the revision number information acquired by the revision number information acquiring means and the revision number information in the first and second storage means of its own, respectively for each of the indoor units and the outdoor unit;
a control program acquiring means for acquiring, when the revision number information acquired by the revision number information acquiring means is the latest one based on a result of the comparison by the comparing means, the control program corresponding to the latest revision number information; and
an updating means for updating the control program in the first and/or second storage means of its own with the control program acquired by the control program acquiring means.

4. An air conditioner including one or more indoor units of one or more types and an outdoor unit connected to the indoor units, each of the indoor units and the outdoor unit having a first rewritable storage means for storing a control program for controlling operation thereof together with revision number information, the air conditioner being **characterized in that** each of the indoor units and the outdoor unit comprises:
a second rewritable storage means for storing a control program for controlling operation of at least one of the other indoor units and outdoor unit than itself together with the respective revision number information;
a revision number information acquiring means for acquiring the revision number information in the first and second storage means of the at least one of the other indoor units and outdoor unit than itself, in response to a predetermined operation;
a comparing means for comparing the revision number information acquired by the revision number information acquiring means and the revision number information in the first and second storage means of its own, respectively for each of the indoor units of one or more types and the outdoor unit;
a control program acquiring means for acquiring, when the revision number information acquired by the revision number information acquiring means is the latest one based on a result of the comparison by the comparing means, the control program corresponding to the latest revision number information; and
an updating means for updating the control program in the first and/or second storage means of its own with the control program acquired by the control program acquiring means.

5. An indoor unit for an air conditioner including one or more indoor units of one or more types and an outdoor unit connected to the indoor units, the indoor units and the outdoor unit having a first rewritable storage means for storing a control program for controlling operation thereof together with revision number information, the indoor unit being **characterized by** comprising:
a second rewritable storage means for storing a control program for controlling operation of at least one of the other indoor units than itself and the outdoor unit together with the respective revision number information;
a revision number information acquiring means for acquiring the revision number information in the first and second storage means of the at least one of the other indoor units than itself and the outdoor unit, in response to a predetermined operation;
a comparing means for comparing the revision number information acquired by the revision number information acquiring means and the revision number information in the first and second storage means of its own, respectively for each of the indoor units of one or more types and the outdoor unit;
a control program acquiring means for acquiring, when the revision number information acquired by the revision number information acquiring means is the latest one based on a result of the comparison by the comparing means, the control program corresponding to the latest revision number information; and
an updating means for updating the control program in the first and/or second storage means of its own with the control program acquired by the control program acquiring means.

6. An outdoor unit for an air conditioner including one or more indoor units of one or more types and an outdoor unit connected to the indoor units, the indoor units and the outdoor unit having a first rewritable storage means for storing a control program for controlling operation thereof together with revision number information, the outdoor unit being **characterized by** comprising:
a second rewritable storage means for storing a control program for controlling operation of the indoor units together with the respective revision number information;
a revision number information acquiring means for acquiring the revision number information in the first and second storage means of the indoor units, in response to a predetermined operation;
a comparing means for comparing the revision number information acquired by the revision number information acquiring means and the revision number information in the first and second storage means of its own, respectively for each of the indoor units of one or more types and the outdoor unit;
a control program acquiring means for acquiring, when the revision number information acquired by the revision number information acquiring means is the latest one based on a result of the comparison by the comparing means, the control program corresponding to the latest revision number information; and
an updating means for updating the control program in the first and/or second storage means of its own with the control program acquired by the control program acquiring means.

7. The air conditioner according to Claim 1 or 4, wherein each of the indoor units and the outdoor unit further comprises a display means for displaying that the update of the control program is ongoing, from when the predetermined operation is received until when the revision number information acquired by the revision number information acquiring means is not the latest one based on the result of the comparison, or until when the update of control program in the first and/or second storage means is completed.

8. The indoor unit according to Claim 2 or 5, further comprising a display means for displaying that the update of the control program is ongoing, from when the predetermined operation is received until when the revision number information acquired by the revision number information acquiring means is not the latest one based on the result of the comparison, or until when the update of control program in the first and/or second storage means is completed.

9. The outdoor unit according to Claim 3 or 6, further comprising a display means for displaying that the update of the control program is ongoing, from when the predetermined operation is received until when the revision number information acquired by the revision number information acquiring means is not the latest one based on the result of the comparison, or until when the update of control program in the first and/or second storage means is completed.
